(19) Europäisches Patentamt
European Patent Office
Office européen des brevets

(11) **EP 3 070 135 B1**

(12) **EUROPEAN PATENT SPECIFICATION**

(45) Date of publication and mention
of the grant of the patent:
**01.01.2020 Bulletin 2020/01**

(51) Int Cl.:
***C09J 133/06*** *(2006.01)*       ***C09J 175/04*** *(2006.01)*
***H01B 5/14*** *(2006.01)*       ***C08G 18/62*** *(2006.01)*

(21) Application number: **14862999.1**

(22) Date of filing: **17.11.2014**

(86) International application number:
**PCT/KR2014/011018**

(87) International publication number:
**WO 2015/072794 (21.05.2015 Gazette 2015/20)**

(54) **ADHESIVE COMPOSITION**

HAFTZUSAMMENSETZUNG

COMPOSITION ADHÉSIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.11.2013 KR 20130139356**

(43) Date of publication of application:
**21.09.2016 Bulletin 2016/38**

(73) Proprietor: **LG Chem, Ltd.
Seoul 150-721 (KR)**

(72) Inventors:
• **PARK, Yong Su
Daejeon 305-738 (KR)**
• **LEE, Hui Je
Daejeon 305-738 (KR)**
• **KIM, Hyun Cheol
Daejeon 305-738 (KR)**
• **KWON, Yoon Kyung
Daejeon 305-738 (KR)**
• **PARK, Hyon Gyu
Daejeon 305-738 (KR)**
• **KIM, Hak Lim
Daejeon 305-738 (KR)**
• **LEE, Dae Hyuck
Daejeon 305-738 (KR)**
• **JUNG, Say Young
Daejeon 305-738 (KR)**

(74) Representative: **Goddar, Heinz J.
Boehmert & Boehmert
Anwaltspartnerschaft mbB
Pettenkoferstrasse 22
80336 München (DE)**

(56) References cited:
EP-A1- 2 592 125       JP-A- H09 188 852
KR-A- 20120 042 073       KR-A- 20130 013 649
KR-B1- 101 267 828       US-A1- 2006 177 651
US-A1- 2012 214 936       US-A1- 2013 098 441
US-B1- 6 465 595

**Description**

CROSS-REFERENCE TO RELATED APPLICATION

This application claims priority to and the benefit of Korean Patent Application No. 10-2013-0139356, filed on November 15, 2013, the disclosure of which is incorporated herein by reference in its entirety.

BACKGROUND

**1. Field of the Invention**

The present application relates to a pressure sensitive adhesive composition, a conductive laminate protective film, and a conductive laminate.

**2. Discussion of Related Art**

In an image display device of a personal computer for mobile, or a small-sized electronic terminal such as an electronic note or a cellular phone, or the like, a protective film is often installed in order to prevent the occurrence of scratches or damage thereon. In particular, as a small-sized electronic terminal for which a pen touch input is available increases, a request for prevention of the occurrence of scratches or damage is increasing. As such a protective pressure sensitive adhesive film, a film having a hard coating layer has been used for preventing the occurrence of scratches or damage on a surface.

If the protective film is easily peeled off, visibility of an image display portion deteriorates, and accordingly, it is needed to have adhesiveness to the extent that the protective film is not peeled off when it is used. However, when performing a repair, it is needed to separate various components in order to exchange damaged portions. Thus, it is, of course, desired that the protective film can also preferably be peeled off. However, the protective film has not been reviewed sufficiently for the peeling performance.

Also, in the case of a conventional protective film, a low-speed peeling force tends to be low and a high-speed peeling force tends to be high. Accordingly, it is difficult to be applied to a low peelable protective film desired regardless of a peeling rate.

Such a problem is generated because factors affecting the peeling force are different. Technology for solving this problem is acutely required. For example, Patent Document 1 discloses a pressure sensitive adhesive tape for protecting a surface as a solution to keep a peeling force.

[Prior art document]

[Patent document]

Patent Document 1: Korean Unexamined Patent Application Publication No. 2011-0135699

US 2006/177651 A1, EP 2 592 125 A1 and US 2012/214936 A1 disclose pressure-sensitive adhesives for laminated objects.

SUMMARY OF THE INVENTION

The present application, as defined in the claims, is directed to providing a pressure sensitive adhesive composition, a conductive laminate protective film, and a conductive laminate.

An exemplary pressure sensitive adhesive composition may include a polymer of a monomer mixture. In the specification of the present application, the term "a monomer mixture" may mean a mixture present in a form in which two or more different monomers are mixed.

In an example, the monomer mixture may include alkyl (meth)acrylate and a monomer containing a crosslinkable functional group.

The alkyl (meth)acrylate is not particularly limited and in consideration of physical properties such as cohesiveness, glass transition temperature, and viscosity, may use alkyl (meth)acrylate having an alkyl group having 1 to 20 carbon atoms, 1 to 16 carbon atoms, 1 to 12 carbon atoms, or 4 to 10 carbon atoms. An example of the alkyl (meth)acrylate may include methyl (meth)acrylate, ethyl (meth)acrylate, n-propyl (meth)acrylate, isopropyl (meth)acrylate, butyl (meth)acrylate, t-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, tetradecyl (meth)acrylate, and the like, and one or two or more of these may be included in a polymerized form in a resin.

The monomer containing the crosslinkable functional group can provide a crosslinkable functional group capable of reacting with a crosslinker to the polymer of the monomer mixture. In the specification of the present application, the term "a monomer containing a crosslinkable functional group" is meant to include a monomer having a crosslinkable functional group and a copolymerizable site at the same time. An example of such a crosslinkable functional group may include a hydroxyl group, a carboxyl group, an epoxy group, an isocyanate group, or the like, and preferably may be a hydroxyl group. In preparation of an acrylic polymer, various monomers which can provide the crosslinkable functional group as described above to the acrylic polymer have been known, and the monomers as described above may be used without limitation in the present application. For example, as a monomer having a hydroxyl group, hydroxyethyl (meth)acrylate, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethyleneglycol (meth)acrylate, 2-hydroxypropyleneglycol (meth)acrylate, or the like may be used.

In an example, a weight ratio of the monomer containing the crosslinkable functional group may be more than 10 wt% in the polymer of the monomer mixture. A lower limit of the ratio of the monomer containing the crosslinkable functional group is not particularly limited as long as the ratio is more than 10 wt%, and, for example, may be 11 wt% or more, 12 wt% or more, 13 wt% or more, or 14 wt% or more. Also, an upper limit of the ratio of the monomer containing the crosslinkable functional group is not particularly limited, and may be 30 wt% or less, 25 wt% or less, or 20 wt% or less. By adjusting the ratio of a content of the monomer containing the crosslinkable functional group in the aforementioned range, a desired level of a peeling force can be ensured regardless of a peeling rate after implementing a pressure sensitive adhesive layer of the pressure sensitive adhesive composition.

Also, the acrylic polymer may further include a copolymerizable monomer containing a nitrogen atom. The copolymerizable monomer containing the nitrogen atom is not particularly limited, and it is preferable to contain a functional group. For example, the functional group may include a hydroxyl group, a carboxyl group, or the like. The copolymerizable monomer containing the nitrogen atom is not particularly limited to any kind, and may include a monomer having an amide group such as hydroxymethyl acrylamide, hydroxyethyl acrylamide, hydroxypropyl acrylamide, (meth)acrylamide, N-isopropylacrylamide, or N-tert-butylacrylamide; a monomer having a tertiary amine group such as N,N-(dimethylamino)ethyl (meth)acrylate, N,N-(diethylamino)ethyl (meth)acrylate, or N,N-(dimethylamino)propyl (meth)acrylate; a monomer having a vinyl group such as N-vinylpyrrolidone, N-vinylcaprolactam, or acryloylmorpholine; N-[3,4-dihydroxyphenethyl] acrylamide, or the like. These may be used alone or in combination of two or more thereof. Preferably, hydroxymethyl acrylamide or hydroxyethyl acrylamide may be used.

For example, 75 to 95 parts by weight of the alkyl (meth)acrylate, 13 to 25 parts by weight of the monomer containing the crosslinkable functional group, and 0.01 to 10 parts by weight of the copolymerizable monomer containing the nitrogen atom may be included in the monomer mixture. By adjusting a content of the copolymerizable monomer containing the nitrogen atom in the aforementioned range, a reaction of the monomer having the aforementioned functional group and a crosslinker can be facilitated, and thus curing time of the acrylic polymer can be shortened, and a decrease in transparency can be prevented when it is applied to optical uses.

In the specification of the present application, the polymer of the monomer mixture as described above may be prepared by conventional polymerization methods in the art, for example, a method such as a solution polymerization, a photo polymerization, a bulk polymerization, a suspension polymerization, an emulsion polymerization, or the like, preferably by a solution polymerization method.

A crosslinker included in the pressure sensitive adhesive composition according to the present application may be used without limitation as long as it has 2 or more, for example, 2 to 6 functional groups capable of reacting with the crosslinkable functional group.

The crosslinker included in the pressure sensitive adhesive composition may be, for example, an isocyanate compound or a mixture thereof. In the specification of the present application, the term "an isocyanate compound" may mean a compound having 2 or more or 2 to 6 isocyanate groups (-NCO).

When a mixture of isocyanate compounds is used as the multifunctional crosslinker, it is not particularly limited. For example, the mixture of isocyanate compounds may be a mixture of an aliphatic acyclic diisocyanate compound and an aliphatic cyclic diisocyanate compound.

A mixing ratio of the mixture is not particularly limited, and for example, the aliphatic acyclic diisocyanate compound and the aliphatic cyclic diisocyanate compound may be included in a weight ratio of 1:9 to 9:1 or 2:8 to 8:2 in the mixture. As the diisocyanate compound, for example, one or two or more selected from an aliphatic isocyanate compound such as 2,2-dimethylpentane diisocyanate, hexamethylene diisocyanate, toluene diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecatriisocyanate, 1,3,6-hexamethylene triisocyanate, 1,8-diisocyanate-4-isocyanatomethyl octane, bis(isocyanatoethyl)carbonate, or bis(isocyanatoethyl) ether; an alicyclic isocyanate compound such as isophorone diisocyanate, 1,2-bis(isocyanatomethyl) cyclohexane, 1,3-bis(isocyanatomethyl) cyclohexane, 1,4-bis(isocyanatomethyl) cyclohexane, dicyclohexylmethane diisocyanate, cyclohexane diisocyanate, methylcyclohexane diisocyanate, dicyclohexyl dimethylmethane isocyanate, or 2,2-dimethyl dicyclohexylmethane isocyanate; an aromatic isocyanate compound such as xylylene diisocyanate (XDI), bis(isocyanatoethyl) benzene, bis(isocyanatopropyl) benzene, bis(isocyanatobutyl) benzene, bis(isocyanatomethyl) naphthalene, bis(isocyanatomethyl) diphenyl ether, phenylene diisocyanate, ethyl phenylene diisocyanate, isopropyl phenylene diisocyanate, dimethyl phenylene diisocyanate, diethyl phenylene diisocyanate, diisopropyl phenylene diisocyanate, trimethyl benzene triisocyanate, benzene triisocyanate, biphenyl diisocyanate, toluidine diisocyanate, 4,4-diphenylmethane diisocyanate, 3,3-dimethyl diphenyl methane-4,4-diisocyanate, bibenzyl-4,4-diisocyanate, bis(isocyanatophenyl) ethylene, 3,3-dimethoxybiphenyl-4,4-diisocyanate, hexahydrobenzene diisocyanate, or hexahydrodiphenylmethane-4,4-diisocyanate; a sulfur-containing aliphatic isocyanate compound such as bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatopropyl) disulfide, bis(isocyanatomethylthio) methane, bis(isocyanatoethylthio) methane, bis(isocyanatoethylthio) ethane, bis(isocyanatomethylthio) ethane, or 1,5-diisocyanato-2-isocyanatomethyl-3-thiapentane; a sulfur-containing aromatic isocyanate compound such as diphenylsulfide-2,4-diisocyanate, diphenylsulfide-4,4-diisocyanate, 3,3-dimethoxy-4,4-diisocyanatodibenzylthioether, bis(4-isocyanatomethylbenzene) sulfide, 4,4-methoxybenzene thioethylene glycol-3,3-diisocyanate, diphenyl disulfide-4,4-diisocyanate, 2,2-dimethyl diphenyl disulfide-5,5-diisocyanate, 3,3-dimethyl diphenyl disulfide-5,5-diisocyanate, 3,3-dimethyl diphenyl disulfide-6,6-diisocyanate, 4,4-dimethyl diphenyl disulfide-5,5-diisocyanate, 3,3-dimethoxy diphenyl disulfide-4,4-diisocyanate, or 4,4-dimethoxy diphenyl disulfide-3,3-diisocyanate; and a sulfur-containing heterocyclic isocyanate compound such as 2,5-diisocyanatothiophene, 2,5-bis(isocyanatomethyl) thiophene, 2,5-diisocyanatotetrahydrothiophene, 2,5-bis(isocyanatomethyl)tetrahydrothiophene, 3,4-bis(isocyanatomethyl)tetrahydrothiophene, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, or 4,5-bis(isocyanatomethyl)-2-methyl-1,3-dithiolane may be used.

Also, in addition to the isocyanate compound, in consideration of the aforementioned effects, if necessary, for example, other crosslinker such as an epoxy compound or a melamine compound may be used.

As the epoxy compound, for example, ethylene glycol diglycidyl ether, triglycidyl ether, trimethylol propane triglycidyl ether, N,N,N',N'-tetraglycidyl ethylenediamine, glycerin diglycidyl ether, etc. may be used. As the melamine compound, for example, a melamine compound including a methoxy group and a melamine resin containing an amino group or a butoxy group may be used, and specifically, CYMEL 325 and CYMEL 327 manufactured by CYTEC; BE3748 and BE 3040 manufactured by BIP; RESIMENE 717 manufactured by MONSANTO; CYMEL 303 manufactured by UNITED CARBIDE; CYMEL 1130 manufactured by AMERICAN CYANAMID, etc. may be used, without being limited thereto.

In an example, the crosslinker is included in a ratio of 20 to 50 parts by weight, relative to 100 parts by weight of the polymer. Also, the crosslinker may be included so that an equivalent of a crosslinkable functional group contained in the crosslinker is in a range of 0.5 to 1.5 equivalents, 0.6 to 1.4 equivalents, or 0.7 to 1.3 equivalents, relative to 1 equivalent of the crosslinkable functional group contained in the polymer.

In the specification of the present application, by controlling a content and/or an equivalent of the crosslinker in the aforementioned range, an appropriate level of a peeling force can be maintained regardless of a peeling rate even after a heat treatment after aging a layer of the pressure sensitive adhesive composition, and thus physical properties required for the protective film can be further provided.

The pressure sensitive adhesive composition according to the present application may further include a crosslinking catalyst. The crosslinking catalyst functions to facilitate the crosslinking of the aforementioned acrylic polymer and a crosslinker. The crosslinking catalyst is not particularly limited to any kind, and may include a tin-based metal compound, a zinc metal compound, an amine compound, a titanium-based metal compound, a bismuth-based metal compound, and an aluminum-based metal compound, preferably, a tin-based metal compound. A specific example of the tin-based metal compound may include a tetravalent or divalent organotin-based compound of dibutyltin dilaurate, dioctyltin dilaurate, dibutyltin bis(acetylacetonate), dibutyltin oxide, dibutyltin maleate, dibutyltin dimaleate, or the like, and is not limited thereto.

A content of the crosslinking catalyst included in the pressure sensitive adhesive composition may be an amount of 0.001 to 1 parts by weight, 0.0015 to 0.5 parts by weight, 0.002 to 0.1 parts by weight, 0.0025 to 0.05 parts by weight, 0.003 to 0.01 parts by weight, or 0.0035 to 0.0075 parts by weight, relative to 100 parts by weight of the aforementioned acrylic polymer. By adjusting the content of the crosslinking catalyst in the aforementioned range, a crosslinking rate can be raised while at the same time maintaining a viscosity.

The pressure sensitive adhesive composition according to the present application may further include a crosslinking retarder. In the pressure sensitive adhesive composition including the isocyanate compound as the crosslinker as described in the present application, the crosslinking retarder can block an isocyanate group contained in the crosslinker to suppress an excess viscosity increase of the pressure sensitive adhesive composition. The crosslinking retarder is not particularly limited to any kind, and may include, for example, β-ketoester such as acetylacetone, methyl acetoacetate, ethyl acetoacetate, octyl acetoacetate, oleyl acetoacetate, lauryl acetoacetate, or stearyl acetoacetate; 2,4-hexanedione, benzoyl acetone, etc., preferably, acetylacetone.

The crosslinking retarder included in the pressure sensitive adhesive composition may be included in an amount of 1 to 10 parts by weight, 1 to 7.5 parts by weight, or 1 to 5 parts by weight, relative to 100 parts by weight of the acrylic polymer. By adjusting a content of the crosslinking retarder within the aforementioned range, gelation or an excessive viscosity increase of the pressure sensitive adhesive composition after blending the aforementioned crosslinker with the acrylic polymer can be suppressed, thereby extending pot life of the pressure sensitive adhesive composition.

The pressure sensitive adhesive composition may further include a tackifier, as necessary. As the tackifier, for example, one or mixing of two or more of hydrocarbon resins or hydrogen adducts thereof; rosin resins or hydrogen adducts thereof; rosin ester resins or hydrogen adducts thereof; terpene resins or hydrogen adducts thereof; terpene phenol resins or hydrogen adducts thereof; polymerized rosin resins; polymerized rosin ester resins; and the like may be used, without being limited thereto. The tackifier may be included in the pressure sensitive adhesive composition in an amount of 100 parts by weight or less, relative to 100 parts by weight of a block copolymer.

Meanwhile, the pressure sensitive adhesive composition according to the present application may further include, in addition to the aforementioned components, one or two or more additives such as a silane coupling agent; an epoxy resin; an ultraviolet stabilizer; an antioxidant; a toning agent; a reinforcing agent; a filler; a defoamer; a surfactant; or a plasticizer.

The pressure sensitive adhesive composition according to the present application may satisfy a condition of the following Expression 1:

$$[\text{Expression 1}]$$

$$0.5 \leq Y/X \leq 4$$

in the Expression 1, X is a peeling force measured at room temperature with a peeling rate of 0.3 m/min and a peeling angle of 180° for a layer of a pressure sensitive adhesive composition in a sample formed by holding at 150°C for 1 hour in such a state that the layer (2.54 cm×15 cm×20 μm (width×length×thickness)) of the pressure sensitive adhesive composition prepared by mixing an acrylic polymer and a crosslinker is held at 40°C for 4 days immediately after mixing of the polymer and the crosslinker, and then is attached on a hard coating layer, and Y is a peeling force measured at room temperature with a peeling rate of 20 m/min and a peeling angle of 180° for the layer of the pressure sensitive adhesive composition in the sample.

In the specification of the present application, the term "room temperature" may mean a natural temperature which is not heated or refrigerated, for example, a temperature of about 10 to 30°C, about 15 to 30°C, about 23°C, or about 25°C.

The peeling force X may be in a range of 5 gf/in to 30 gf/in or 10 gf/in to 30 gf/in. By controlling the peeling force X in the aforementioned range, an adherend can be stably protected from external contamination factors, and a pressure sensitive adhesive which does not damage the adherend upon peeling can be provided.

For measurement of the peeling force, after preparing a specimen in which a size of the pressure sensitive adhesive layer is the same as the aforementioned adhesive area, a peeling force at the time of separating the pressure sensitive adhesive layer which is attached on a hard coating layer of a substrate may be measured using a peeling force measuring instrument.

The pressure sensitive adhesive composition included in such a pressure sensitive adhesive layer is as described above.

The peeling force Y may be in a range of 5 gf/in to 70 gf/in or 5 gf/in to 60 gf/in. By controlling the peeling force Y in the aforementioned range, an adherend can be stably protected from external contamination factors, and a pressure sensitive adhesive which does not damage the adherend upon peeling can be provided.

Also, in the Expression 1, a value of Y/X may be in a range of 0.6 or more to 3.75 or less, or 0.7 or more to 3.5 or less.

Moreover, the size of the pressure sensitive adhesive layer for the measurement of the peeling force is as described above.

The present application also relates to a conductive laminate protective film. The conductive laminate protective film may be used for protecting, for example, a surface of a conductive laminate, specifically, a hard coating layer.

The conductive laminate may include, for example, a type having a substrate and a transparent electrode layer deposited on the substrate.

It is preferable to use a transparent material such as a plastic film as the substrate used in the conductive laminate. For example, the substrate may include a film of various synthetic resins, e.g., a polyester-based resin such as a polyethylene terephthalate resin, a polyethylene naphthalate resin, or a polybutylene terephthalate resin; an acetate-based resin; a polyether sulfone-based resin; a polycarbonate-based resin; a polyamide-based resin; a polyimide-based resin; a polyolefin-based resin; (meth)acrylate-based resin; polyvinyl chloride-based resin; polystyrene-based resin; a polyvinyl alcohol-based resin; polyarylate-based resin; or polyphenylene sulfide-based resin, but is not limited thereto.

Also, the substrate may be a single layer, or may be two or more, same or different layers.

The transparent electrode layer may be formed of oxide, nitride, or oxynitride of one or more selected from the group consisting of Si, Ti, Sn, Nb, In, Mg, Ta, and Zn. For example, the transparent electrode layer may include indium oxide, tin oxide, zinc oxide, indium oxide-tin oxide (ITO), antimony oxide-tin oxide (ATO), zinc oxide-aluminum oxide (ZAO), etc., but is not limited thereto.

The transparent electrode layer may be formed by for example, a method of forming a coating layer, such as a vacuum deposition method, a sputtering method, an ion plating method, a spray thermal decomposition method, a chemical plating method, an electroplating method, or any combinations of two or more of the aforementioned methods. Preferably, the transparent electrode layer may be formed above the substrate, that is, above a spacer and above the substrate between spacers by a vacuum deposition method or a sputtering method.

Also, the conductive laminate may include an undercoating layer above the substrate. By forming the undercoating layer above the substrate, the transparent electrode layer may be deposited on the substrate with a good adhesion. The undercoating layer may be an organic layer, an inorganic layer, or an organic-inorganic composite layer formed of organic matters, inorganic matters, or composites thereof. The organic layer, the inorganic layer, or the organic-inorganic composite layer may include an organic silane compound, or an organic silane compound and metal alkoxide. Preferably, a content of the organic silane in the undercoating layer may be 20 to 99.99 wt%, more preferably, 50 to 99 wt%, further preferably, 70 to 99 wt%. Also, a content of the metal alkoxide may be 0.01 to 80 wt%, more preferably, 0.01 to 70 wt%, further preferably, 0.01 to 20 wt%. A thickness of the undercoating layer may be 10 nm to 4000 nm, more preferably, 10 nm to 150 nm. If the thickness is less than 10 nm, the entire surface may not be covered uniformly. If the thickness is more than 4000 nm, it is difficult to expect an improvement in transparency and a surface crack may be created. The undercoating layer may be composed of two layers of a low refractive index layer and a high refractive index layer, or a multilayer formed by alternately depositing the low refractive index layer and the high refractive index layer in order to improve an optical property of a transparent conductive film. Also, the coating method of the undercoating layer is not particularly limited, and the undercoating layer may be formed by conventional methods, for example, a wet coating such as a spin coating, a dip coating, or a spray coating, without being limited thereto.

In an example, the conductive laminate protective film according to the present application may include a protective substrate layer; and the pressure sensitive adhesive layer in which a crosslinked structure is implemented, formed on one side or both sides of the substrate layer.

As the protective substrate layer included in the conductive laminate protective film, a general film or sheet known in the art may be used. For example, a plastic film, e.g., a polyester film such as polyethylene terephthalate or polybutylene terephthalate; a polytetrafluoroethylene film, a polyethylene film, a polypropylene film, a polybutene film, polybutadiene film, poly(vinyl chloride) film, or polyimide film may be used. Such a film may be composed of a single layer, or two or more layers laminated. In some cases, it may further include a functional layer such as an antifouling layer. Also, in view of the improvement in substrate adhesion, a surface treatment such as a primer treatment may be carried out on one side or both sides of the substrate.

A thickness of the protective substrate layer is selected appropriately according to the purpose and is not particularly limited. Typically, the protective substrate layer may be formed appropriately in a thickness of 5 μm to 500 μm, or 10 μm to 100 μm.

A thickness of the pressure sensitive adhesive layer included in the conductive laminate protective film according to the present application is not particularly limited. For example, the pressure sensitive adhesive layer may be used appropriately in a range of 2 μm to 100 μm, or 5 μm to 50 μm.

The pressure sensitive adhesive composition may also be applied to a protective film for an optical film in addition to purpose of the conductive laminate protective film.

As the optical film, a polarizing plate, a polarizer, a polarizer protective film, a retardation film, a viewing angle compensation film, a brightness enhancement film, or the like may be exemplified, without being limited thereto. In the specification of the present application, the terms "a polarizer" and "a polarizing plate" refer to objects distinguished from each other. That is, a polarizer refers to a film, a sheet, or a device itself, exhibiting a polarization function, while a polarizing plate refers to an optical device that includes other elements along with the polarizer. As the other elements that may be included along with the polarizer in the optical device, a polarizer protective film, a retardation film, or the like may be exemplified, without being limited thereto.

The present application also relates to a conductive laminate.

In an example, the conductive laminate includes a substrate layer; a conductive laminate including a conductive layer formed on one side of the substrate layer and a hard coating layer formed on the other side of the substrate layer; and a protective film including a protective substrate layer and a pressure sensitive adhesive layer formed on one side of the protective substrate layer wherein the pressure sensitive adhesive layer is attached on the hard coating layer of the conductive laminate. The pressure sensitive adhesive layer of the protective film may include a crosslinked state of a pressure sensitive adhesive composition including: an acrylic polymer that is a polymer of a monomer mixture including alkyl (meth)acrylate and a monomer containing a crosslinkable functional group wherein a weight ratio of the monomer containing the crosslinkable functional group is more than 10 wt% in the monomer mixture; and a crosslinker in a ratio of 1 to 50 parts by weight or 5 to 50 parts by weight, relative to 100 parts by weight of the polymer.

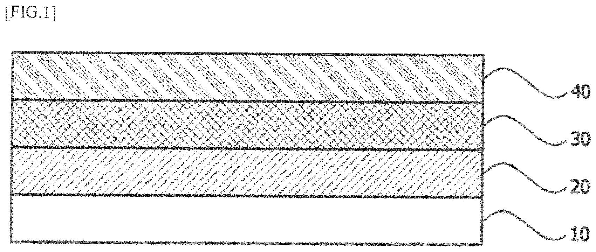

FIG. 1 illustrates an exemplary conductive laminate according to the present application. The exemplary conductive laminate may include a conductive layer 40 and a hard coating layer 30 formed sequentially, and a protective film which includes a pressure sensitive adhesive layer 20 and a protective substrate layer 10. A substrate layer may be present between the conductive layer 40 and the hard coating layer 30.

The hard coating layer 30 included in the conductive laminate may be formed through, for example, a method of applying a rigid resin such as an acrylic urethane resin or a siloxane resin and curing it. The hard coating layer 30 may typically be formed in a thickness of approximately 0.1 $\mu$m to 30 $\mu$m.

Also, the protective film may be attached on the hard coating layer of the conductive laminate so as to be peelable by the pressure sensitive adhesive layer 20.

The pressure sensitive adhesive layer 20 may include a crosslinked product of a pressure sensitive adhesive composition including: an acrylic polymer that is a polymer of a monomer mixture including alkyl (meth)acrylate and a monomer containing a crosslinkable functional group wherein a weight ratio of the monomer containing the crosslinkable functional group is more than 10 wt% in the monomer mixture; and a crosslinker in a ratio of 1 to 50 parts by weight or 5 to 50 parts by weight, relative to 100 parts by weight of the polymer. Characteristics of the components contained in these are as described above.

Also, a peeling force of the pressure sensitive adhesive layer included in the conductive laminate may satisfy the following Expression 2, and the details thereof are as described above.

$$[\text{Expression 2}]$$

$$0.5 \le Y/X \le 4$$

in the Expression 2, X is a peeling force measured at room temperature with a peeling rate of 0.3 m/min and a peeling angle of 180° for a layer of a pressure sensitive adhesive composition in a sample formed by holding at 150°C for 1 hour in such a state that the layer (2.54 cm×15 cm×20 $\mu$m (width×length×thickness)) of the pressure sensitive adhesive composition prepared by mixing an acrylic polymer and a crosslinker is held at 40°C for 4 days immediately after mixing of the polymer and the crosslinker, and then is attached on a hard coating layer, and Y is a peeling force measured at room temperature with a peeling rate of 20 m/min and a peeling angle of 180° for the layer of the pressure sensitive adhesive composition in the sample.

Also, in the Expression 2, a value of Y/X may be in a range of 0.6 or more to 3.75 or less, or 0.7 or more to 3.5 or less.

In the specification of the present application, a method of forming a pressure sensitive adhesive layer on the conductive laminate protective film or the conductive laminate is not particularly limited. For example, a method of coating a pressure sensitive adhesive composition directly and curing it to implement a crosslinked structure, or a method of coating and curing a pressure sensitive adhesive composition on a release-treated surface of a release film to form a crosslinked structure, and then transferring it, or the like may be used.

In the coating process, it is preferable in view of performing a coating process uniformly that the crosslinker included in the pressure sensitive adhesive composition is controlled so that a crosslinking reaction of its functional group does not proceed. Through this, the crosslinker can form a crosslinked structure in curing and aging processes after coating operations to improve cohesiveness of the pressure sensitive adhesive, and improve physical properties such as viscosity and the like. Also, it is preferable to perform the coating process after components causing bubbles such as volatile components or reaction residues are fully removed in the pressure sensitive adhesive composition. By doing so, such problems that a modulus lowers due to excessively low crosslinking density or molecular weight of the pressure sensitive adhesive and a scatterer is formed due to big bubbles existing between a glass plate and a pressure sensitive adhesive layer at a high temperature can be prevented.

A cured product of a pressure sensitive adhesive composition according to the present application constitutes a pressure sensitive adhesive layer attached on a hard coating surface of a conductive laminate or the like, so that a surface of the conductive laminate or the like can be protected as well as that a peeling force can be maintained appropriately regardless of a peeling rate even after a heat treatment for sintering, and thus can be used for a protective film.

BRIEF DESCRIPTION OF THE DRAWINGS

FIG. 1 is a diagram illustrating a structure of a conductive laminate according to an example of the present application.

DETAILED DESCRIPTION OF EXEMPLARY EMBODIMENTS

A pressure sensitive adhesive composition of the present application will be described in detail below through Examples and Comparative Examples, but the scope of the pressure sensitive adhesive composition is not limited by the Examples presented below.

Hereinafter, a peeling force in Examples and Comparative Examples was evaluated by the following method.

**Peeling Force Test**

For measurement of a peeling force, a pressure sensitive adhesive layer of a prepared protective film was attached on an ITO hard coating surface as an adherend by aging at 40°C for 96 hours. After attachment, it was heat-treated at 150°C for 1 hour. Then, a low-speed peeling force was measured at room temperature with a peeling rate of 0.3 m/min and a peeling angle of 180° using a texture analyzer, and a high-speed peeling force was measured at room temperature with a peeling rate of 20 m/min and a peeling angle of 180° using a high-speed peeling force measuring instrument (CKTS-710S, Chungbuk Tech). The results were represented in Table 2. The measured peeling forces were evaluated according to the following evaluation criteria, and the results were represented in Table 3.

<Evaluation Criteria>

○: Value of the measured peeling force was less than 70 gf/inch.
×: Value of the measured peeling force was 70 gf/inch or more.

**[Preparation of an Acrylic Polymer]**

**Preparation Example 1. Preparation of an Acrylic Polymer A**

85 Parts by weight of ethylhexyl acrylate (EHA) and 15 parts by weight of hydroxyethyl acrylate (HEA) were poured in a 2 L reactor in which a nitrogen gas was refluxed and that was equipped with a cooling apparatus for easy temperature control. Subsequently, 149.1 parts by weight of ethyl acetate (EAc) as a solvent was poured therein, and to remove oxygen, a nitrogen gas was purged for 60 minutes. 0.04 Parts by weight of azobisisobutyronitrile (AIBN) as a reaction initiator was poured therein in a state of maintaining at a temperature of 67°C, and the mixture was reacted for 3 hours. A reaction product was diluted in ethyl acetate (EAc) to prepare an acrylic polymer A having a solid concentration of 28% and a molecular weight of 700,000.

**Preparation Example 2. Preparation of an Acrylic Polymer B**

An acrylic polymer B was prepared in a manner similar to Preparation Example 1, except that 90 parts by weight of ethylhexyl acrylate (EHA) and 10 parts by weight of hydroxyethyl acrylate (HEA) were poured therein.

**Preparation Example 3. Preparation of an Acrylic Polymer C**

An acrylic polymer C was prepared in a manner similar to Preparation Example 1, except that 95 parts by weight of ethylhexyl acrylate (EHA) and 5 parts by weight of hydroxyethyl acrylate (HEA) were poured therein.

**Preparation Example 4. Preparation of an Acrylic Polymer D**

An acrylic polymer D was prepared in a manner similar to Preparation Example 1, except that 97 parts by weight of ethylhexyl acrylate (EHA) and 3 parts by weight of hydroxyethyl acrylate (HEA) were poured therein.

**Preparation Example 5. Preparation of an Acrylic Polymer E**

An acrylic polymer E was prepared in a manner similar to Preparation Example 1, except that 99 parts by weight of ethylhexyl acrylate (EHA) and 1 parts by weight of hydroxyethyl acrylate (HEA) were poured therein.

**Preparation Example 6. Preparation of an Acrylic Polymer F**

An acrylic polymer F was prepared in a manner similar to Preparation Example 1, except that 84.1 parts by weight of ethylhexyl acrylate (EHA), 0.9 parts by weight of hydroxymethyl acrylamide (HMAA), and 15 parts by weight of hydroxyethyl acrylate (HEA) were poured therein.

**Preparation Example 7. Preparation of an Acrylic Polymer G**

An acrylic polymer G was prepared in a manner similar to Preparation Example 1, except that 85 parts by weight of ethylhexyl acrylate (EHA) and 15 parts by weight of hydroxybutyl acrylate (HBA) were poured therein.

**[Preparation of a Pressure Sensitive Adhesive Composition and a Protective Film]**

**Example 1**

The acrylic polymer A obtained in the Preparation Example 1 was used as a pressure sensitive adhesive resin. A crosslinker capable of providing 1.1 equivalents of a functional group, relative to 1 equivalent of a crosslinkable functional group contained in the pressure sensitive adhesive resin (or 27.3 parts by weight of a crosslinker, relative to 100 parts by weight of the acrylic polymer A), and 0.005 parts by weight of dibutyltin dilaurate and 3 parts by weight of acetylacetone, relative to 100 parts by weight of the pressure sensitive adhesive resin were mixed uniformly therein, respectively, to prepare a pressure sensitive adhesive composition.
The pressure sensitive adhesive composition was coated with 20 $\mu$m on 125 $\mu$m of A4300 (polyethylene terephthalate (PET) film, Toyobo), and was then dried at 120°C for 3 minutes to form a transparent pressure sensitive adhesive layer having a coated film thickness of 20 $\mu$m to prepare a protective film.

**Example 2**

The protective film was prepared in the same manner as in Example 1, except that the acrylic polymer F obtained in the Preparation Example 6 was used.

**Example 3**

The protective film was prepared in the same manner as in Example 1, except that the acrylic polymer G obtained in the Preparation Example 7 was used.

**Comparative Example 1**

The protective film was prepared in the same manner as in Example 1, except that the acrylic polymer B obtained in the Preparation Example 2 was used.

**Comparative Example 2**

The protective film was prepared in the same manner as in Example 1, except that the acrylic polymer C obtained in the Preparation Example 3 was used.

**Comparative Example 3**

The protective film was prepared in the same manner as in Example 1, except that the acrylic polymer D obtained in the Preparation Example 4 was used.

**Comparative Example 4**

The protective film was prepared in the same manner as in Example 1, except that the acrylic polymer E obtained in the Preparation Example 5 was used.
The composition of Examples and Comparative Examples above is represented in Table 1 below.

[Table 1]

| Classification | | Example | | | Comparative Example | | | |
|---|---|---|---|---|---|---|---|---|
| | | 1 | 2 | 3 | 1 | 2 | 3 | 4 |
| Acrylic Polymer | EHA | 85 | 84.1 | 85 | 90 | 95 | 97 | 99 |
| | HMAA | - | 0.9 | - | - | - | - | - |
| | HEA | 15 | 15 | - | 10 | 5 | 3 | 1 |
| | HBA | - | - | 15 | - | - | - | - |
| Crosslinker HDI:TDI(8:2) | Equivalents | 1.1 | 1.1 | 1.1 | 1.1 | 1.1 | 1.1 | 1.1 |
| | Contents | 27.3 | 27.3 | 22 | 18.2 | 9.1 | 5.5 | 1.8 |
| Crossli nkin g Catalyst | DBTL | 0.005 | 0.005 | 0.005 | 0.005 | 0.005 | 0.005 | 0.005 |
| Crosslinking Retarder | Aa | 3 | 3 | 3 | 3 | 3 | 3 | 3 |

Unit: parts by weight
EHA: ethylhexyl acrylate
HMAA: hydroxymethyl acrylamide
HEA: hydroxyethyl acrylate
HBA: hydroxybutyl acrylate
HDI: hexamethylene diisocyanate
TDI: toluene diisocyanate
DBTL: dibutyltin dilaurate
Aa: acetylacetone

The results of the low-speed and high-speed peeling forces measured with regard to each of Examples and Comparative Examples above are represented in Tables 2 and 3 below.

[Table 2]

| Classification | Example | | | Comparative Example | | | |
|---|---|---|---|---|---|---|---|
| | 1 | 2 | 3 | 1 | 2 | 3 | 4 |
| low-speed peeling force (0.3m/min) | 25 | 15 | 16 | 17 | 14 | 22 | 26 |
| high-speed peeling force (20m/min) | 23 | 16 | 52 | 75 | 98 | 142 | 220 |

Unit: gf/in

[Table 3]

| Classification | Example | | | Comparative Example | | | |
|---|---|---|---|---|---|---|---|
| | 1 | 2 | 3 | 1 | 2 | 3 | 4 |
| low-speed peeling force | ○ | ○ | ○ | ○ | ○ | ○ | ○ |
| high-speed peeling force | ○ | ○ | ○ | × | × | × | × |

As will be confirmed from Tables 2 and 3 above, in the case of a pressure sensitive adhesive layer including a cured product of the pressure sensitive adhesive composition according to the present application, low-speed and high-speed peeling forces can be maintained low even after a heat treatment for sintering in the preparation of a protective film, and thus can be applied usefully to a protective film for a conductive film and a conductive laminate.

It will be apparent to those skilled in the art that various modifications can be made to the above-described exemplary embodiments of the present application without departing from the spirit or scope of the application. Thus, it is intended that the present application covers all such modifications provided they come within the scope of the appended claims and their equivalents.

[Description of Symbols]

10: protective substrate layer
20: pressure sensitive adhesive layer
30: hard coating layer
40: conductive layer

**Claims**

1.  A pressure sensitive adhesive composition comprising:

    a polymer of a monomer mixture comprising alkyl (meth)acrylate and a monomer containing a crosslinkable functional group wherein a weight ratio of the monomer containing the crosslinkable functional group is more than 10 wt% in the monomer mixture; and
    a crosslinker in a ratio of 20 to 50 parts by weight, relative to 100 parts by weight of the polymer.

2.  The pressure sensitive adhesive composition of claim 1, wherein the weight ratio of the monomer containing the crosslinkable functional group is 13 wt% or more in the monomer mixture.

3.  The pressure sensitive adhesive composition of claim 1, wherein the weight ratio of the monomer containing the crosslinkable functional group is 30 wt% or less in the monomer mixture.

4.  The pressure sensitive adhesive composition of claim 1, wherein the monomer mixture comprises 75 to 95 parts by weight of the alkyl (meth)acrylate and 13 to 25 parts by weight of the monomer containing the crosslinkable functional group.

5.  The pressure sensitive adhesive composition of claim 1, wherein the alkyl (meth)acrylate is alkyl (meth)acrylate having an alkyl group having 1 to 20 carbon atoms.

6.  The pressure sensitive adhesive composition of claim 1, wherein the crosslinkable functional group is a hydroxyl group.

7.  The pressure sensitive adhesive composition of claim 1, wherein the monomer mixture further comprises a copolymerizable monomer containing a nitrogen atom.

8.  The pressure sensitive adhesive composition of claim 7, wherein the copolymerizable monomer containing the nitrogen atom is hydroxyalkyl acrylamide, (meth)acrylamide, N-isopropylacrylamide, N-tert-butylacrylamide, N-vinylcaprolactam, N-vinylpyrrolidone, N-vinyl-2-pyrrolidone, acryloylmorpholine, or N-[3,4-dihydroxyphenethyl] acrylamide.

9.  The pressure sensitive adhesive composition of claim 7, wherein the monomer mixture comprises 75 to 95 parts by weight of the alkyl (meth)acrylate, 13 to 25 parts by weight of the monomer containing the crosslinkable functional group, and 0.01 to 10 parts by weight of the copolymerizable monomer containing the nitrogen atom.

10. The pressure sensitive adhesive composition of claim 1, wherein the crosslinker is a mixture of an aliphatic acyclic diisocyanate compound and an aliphatic cyclic diisocyanate compound.

11. The pressure sensitive adhesive composition of claim 10, wherein the aliphatic acyclic diisocyanate compound and the aliphatic cyclic diisocyanate compound are mixed in a weight ratio of 1:9 to 9:1 in the mixture.

12. The pressure sensitive adhesive composition of claim 1, wherein the crosslinker is comprised so that an equivalent of a crosslinkable functional group contained in the crosslinker is in a range of 0.5 to 1.5 equivalents, relative to 1 equivalent of the crosslinkable functional group contained in the polymer.

13. The pressure sensitive adhesive composition of claim 1, further comprising a crosslinking catalyst in an amount of 0.001 to 1 parts by weight, relative to 100 parts by weight of the polymer.

14. The pressure sensitive adhesive composition of claim 1, further comprising a crosslinking retarder in an amount of 1 to 10 parts by weight, relative to 100 parts by weight of the polymer.

15. The pressure sensitive adhesive composition of claim 1, which satisfies a condition of the following Expression 1:

[Expression 1]

$$0.5 \leq Y/X \leq 4$$

in the Expression 1, X is a peeling force measured at room temperature with a peeling rate of 0.3 m/min and a peeling angle of 180° for a layer of a pressure sensitive adhesive composition in a sample formed by holding at 150°C for 1 hour in such a state that the layer (2.54 cm×15 cm×20 $\mu$m (width×length×thickness)) of the pressure sensitive adhesive composition prepared by mixing an acrylic polymer and a crosslinker is held at 40°C for 4 days immediately after mixing of the polymer and the crosslinker, and then is attached on a hard coating layer, and Y is a peeling force measured at room temperature with a peeling rate of 20 m/min and a peeling angle of 180° for the layer of the pressure sensitive adhesive composition in the sample.

16. The pressure sensitive adhesive composition of claim 15, wherein the peeling force X is in a range of 0.049 N/2.54 cm (5 gf/in) to 0.294N/2.54 cm (30 gf/in).

17. The pressure sensitive adhesive composition of claim 15, wherein the peeling force Y is in a range of 0.049N/2.54 cm (5 gf/in) to 0.686N/2.54 cm (70 gf/in).

18. A conductive laminate protective film comprising:

a protective substrate layer; and
a layer of the pressure sensitive adhesive composition of claim 1 in which a crosslinked structure is implemented, formed on one side or both sides of the substrate layer.

19. A conductive laminate comprising:

a substrate layer;
a conductive laminate comprising a conductive layer formed on one side of the substrate layer and a hard coating layer formed on the other side of the substrate layer; and.
a protective film comprising a protective substrate layer and a pressure sensitive adhesive layer formed on one side of the protective substrate layer wherein the pressure sensitive adhesive layer is attached on the hard coating layer of the conductive laminate,
wherein the pressure sensitive adhesive layer of the protective film comprises a crosslinked state of a pressure sensitive adhesive composition of claim 1.

20. A conductive laminate comprising:

a conductive film comprising a conductive layer and a hard coating layer which are formed sequentially; and
a protective film comprising a pressure sensitive adhesive layer and a protective substrate layer,
wherein the protective film is attached on the hard coating layer of the conductive film so as to be peelable by the pressure sensitive adhesive layer, wherein the pressure sensitive adhesive layer comprises a crosslinked state of a pressure sensitive adhesive composition of claim 1.

**Patentansprüche**

1. Haftklebstoffzusammensetzung, umfassend:

ein Polymer einer Monomermischung umfassend Alkyl(meth)acrylat und ein Monomer enthaltend eine vernetzbare funktionelle Gruppe, wobei ein Gewichtsverhältnis des Monomers enthaltend die vernetzbare funktionelle Gruppe mehr als 10 Gew.-% in der Monomermischung ist; und

einen Vernetzer in einem Verhältnis von 20 bis 50 Gewichtsteilen, in Bezug auf 100 Gewichtsteile des Polymers.

2. Haftklebstoffzusammensetzung nach Anspruch 1, wobei das Gewichtsverhältnis des Monomers enthaltend die vernetzbare funktionelle Gruppe 13 Gew.-% oder mehr in der Monomermischung ist.

3. Haftklebstoffzusammensetzung nach Anspruch 1, wobei das Gewichtsverhältnis des Monomers enthaltend die vernetzbare funktionelle Gruppe 30 Gew.-% oder weniger in der Monomermischung ist.

4. Haftklebstoffzusammensetzung nach Anspruch 1, wobei die Monomermischung 75 bis 95 Gewichtsteile des Alkyl(meth)acrylats und 13 bis 25 Gewichtsteile des Monomers enthaltend die vernetzbare funktionelle Gruppe umfasst.

5. Haftklebstoffzusammensetzung nach Anspruch 1, wobei das Alkyl(meth)acrylat Alkyl(meth)acrylat mit einer Alkylgruppe mit 1 bis 20 Kohlenstoffatomen ist.

6. Haftklebstoffzusammensetzung nach Anspruch 1, wobei die vernetzbare funktionelle Gruppe eine Hydroxylgruppe ist.

7. Haftklebstoffzusammensetzung nach Anspruch 1, wobei die Monomermischung ferner ein copolymerisierbares Monomer enthaltend ein Stickstoffatom umfasst.

8. Haftklebstoffzusammensetzung nach Anspruch 7, wobei das copolymerisierbare Monomer enthaltend das Stickstoffatom Hydroxyalkylacrylamid, (Meth)acrylamid, N-Isopropylacrylamid, N-tert-Butylacrylamid, N-Vinylcaprolactam, N-Vinylpyrrolidon, N-Vinyl-2-pyrrolidon, Acryloylmorpholin oder N-[3,4-Dihydroxyphenethyl]acrylamid ist.

9. Haftklebstoffzusammensetzung nach Anspruch 7, wobei die Monomermischung 75 bis 95 Gewichtsteile des Alkyl(meth)acrylats, 13 bis 25 Gewichtsteile des Monomers enthaltend die vernetzbare funktionelle Gruppe und 0,01 bis 10 Gewichtsteile des copolymerisierbaren Monomers enthaltend das Stickstoffatom umfasst.

10. Haftklebstoffzusammensetzung nach Anspruch 1, wobei der Vernetzer eine Mischung einer aliphatischen azyklischen Diisocyanatverbindung und einer aliphatischen zyklischen Diisocyanatverbindung ist.

11. Haftklebstoffzusammensetzung nach Anspruch 10, wobei die aliphatische azyklische Diisocyanatverbindung und die aliphatische zyklische Diisocyanatverbindung in einem Gewichtsverhältnis von 1:9 bis 9:1 in der Mischung gemischt sind.

12. Haftklebstoffzusammensetzung nach Anspruch 1, wobei der Vernetzer so umfasst ist, dass ein Äquivalent einer vernetzbaren funktionellen Gruppe enthaltend in dem Vernetzer in einem Bereich von 0,5 bis 1,5 Äquivalenten ist, in Bezug auf 1 Äquivalent der vernetzbaren funktionellen Gruppe enthaltend in dem Polymer.

13. Haftklebstoffzusammensetzung nach Anspruch 1, weiter umfassend einen Vernetzungskatalysator in einer Menge von 0,001 bis 1 Gewichtsteilen, in Bezug auf 100 Gewichtsteile des Polymers.

14. Haftklebstoffzusammensetzung nach Anspruch 1, weiter umfassend einen Vernetzungsverzögerer in einer Menge von 1 bis 10 Gewichtsteilen, in Bezug auf 100 Gewichtsteile des Polymers.

15. Haftklebstoffzusammensetzung nach Anspruch 1, die eine Bedingung des folgenden Ausdrucks 1 erfüllt:

[Ausdruck 1]

$$0{,}5 \leq Y/X \leq 4,$$

wobei im Ausdruck 1 X eine Abziehkraft ist, gemessen bei Raumtemperatur mit einer Abziehrate von 0,3 m/min und einem Abziehwinkel von 180° für eine Schicht einer Haftklebstoffzusammensetzung in einer Probe, gebildet durch Halten bei 150°C für 1 Stunde in einem solchen Zustand, dass die Schicht (2,54 cm x 15 cm x 20 $\mu$m (Breite

x Länge x Dicke)) der Haftklebstoffzusammensetzung, hergestellt durch Mischen eines acrylischen Polymers und eines Vernetzers, bei 40°C für 4 Tage gehalten wird, unmittelbar nach Mischen des Polymers und des Vernetzers, und dann an eine Hartbeschichtungsschicht angefügt wird, und wobei Y eine Abziehkraft ist, gemessen bei Raumtemperatur mit einer Abziehrate von 20 m/min und einem Abziehwinkel von 180° für die Schicht der Haftklebstoffzusammensetzung in der Probe.

16. Haftklebstoffzusammensetzung nach Anspruch 15, wobei die Abziehkraft X in einem Bereich von 0,049 N/2,54 cm (5 gf/in) bis 0,294 N/2,54 cm (30 gf/in) ist.

17. Haftklebstoffzusammensetzung nach Anspruch 15, wobei die Abziehkraft Y in einem Bereich von 0,049 N/2,54 cm (5 gf/in) bis 0,686 N/2,54 cm (70 gf/in) ist.

18. Leitungslaminatschutzfilm, umfassend:

eine Schutzsubstratschicht; und
eine Schicht der Haftklebstoffzusammensetzung nach Anspruch 1, bei der eine vernetzte Struktur implementiert ist, gebildet auf einer Seite oder beiden Seiten der Substratschicht.

19. Leitungslaminat, umfassend:

eine Substratschicht;
ein Leitungslaminat umfassend eine Leitungsschicht, die auf einer Seite der Substratschicht gebildet ist, und eine Hartbeschichtungsschicht, die auf der anderen Seite der Substratschicht gebildet ist; und
einen Schutzfilm umfassend eine Schutzsubstratschicht und eine Haftklebstoffschicht, die auf einer Seite der Schutzsubstratschicht gebildet ist, wobei die Haftklebstoffschicht an der Hartbeschichtungsschicht des Leitungslaminats angefügt ist,
wobei die Haftklebstoffschicht des Schutzfilms einen vernetzten Zustand einer Haftklebstoffzusammensetzung nach Anspruch 1 umfasst.

20. Leitungslaminat, umfassend:

einen Leitungsfilm umfassend eine Leitungsschicht und eine Hartbeschichtungsschicht, die sequentiell gebildet sind; und
einen Schutzfilm umfassend eine Haftklebstoffschicht und eine Schutzsubstratschicht,
wobei der Schutzfilm an der Hartbeschichtungsschicht des Leitungsfilms angefügt ist, um durch die Haftklebstoffschicht abziehbar zu sein, wobei die Haftklebstoffschicht einen vernetzten Zustand einer Haftklebstoffzusammensetzung nach Anspruch 1 umfasst.

**Revendications**

1. Composition adhésive sensible à la pression comprenant :

un polymère d'un mélange de monomères comprenant un (méth)acrylate d'alkyle et un monomère contenant un groupe fonctionnel réticulable dans laquelle un rapport en poids du monomère contenant le groupe fonctionnel réticulable fait plus de 10 % en poids dans le mélange de monomères ; et
un agent de réticulation dans un rapport compris entre 20 et 50 parties en poids pour 100 parties en poids du polymère.

2. Composition adhésive sensible à la pression selon la revendication 1, dans laquelle le rapport en poids du monomère contenant le groupe fonctionnel réticulable est égal ou supérieur à 13 % en poids dans le mélange de monomères.

3. Composition adhésive sensible à la pression selon la revendication 1, dans laquelle le rapport en poids du monomère contenant le groupe fonctionnel réticulable est égal ou inférieur à 30 % en poids dans le mélange de monomères.

4. Composition adhésive sensible à la pression selon la revendication 1, dans laquelle le mélange de monomères comprend entre 75 et 95 parties en poids du (méth)acrylate d'alkyle et entre 13 et 25 parties en poids du monomère contenant le groupe fonctionnel réticulable.

**5.** Composition adhésive sensible à la pression selon la revendication 1, dans laquelle le (méth)acrylate d'alkyle est un (méth)acrylate d'alkyle ayant un groupe alkyle ayant 1 à 20 atomes de carbone.

**6.** Composition adhésive sensible à la pression selon la revendication 1, dans laquelle le groupe fonctionnel réticulable est un groupe hydroxyle.

**7.** Composition adhésive sensible à la pression selon la revendication 1, dans laquelle le mélange de monomères comprend en outre un monomère copolymérisable contenant un atome d'azote.

**8.** Composition adhésive sensible à la pression selon la revendication 7, dans laquelle le monomère copolymérisable contenant l'atome d'azote est un acrylamide d'hydroxyalkyle, (méth)acrylamide, N-isopropylacrylamide, N-tert-butylacrylamide, N-vinylcaprolactame, N-vinylpyrrolidone, N-vinyl-2-pyrrolidone, acryloylmorpholine ou acrylamide de N-[3,4-dihydroxyphénéthyl].

**9.** Composition adhésive sensible à la pression selon la revendication 7, dans laquelle le mélange de monomères comprend entre 75 et 95 parties en poids du (méth)acrylate d'alkyle, entre 13 et 25 parties en poids du monomère contenant le groupe fonctionnel réticulable, et entre 0,01 et 10 parties en poids du monomère copolymérisable contenant l'atome d'azote.

**10.** Composition adhésive sensible à la pression selon la revendication 1, dans laquelle l'agent de réticulation est un mélange d'un composé d'un diisocyanate acyclique aliphatique et d'un composé de diisocyanate cyclique aliphatique.

**11.** Composition adhésive sensible à la pression selon la revendication 10, dans laquelle le composé de diisocyanate acyclique aliphatique et le composé de diisocyanate cyclique aliphatique sont mélangés dans un rapport en poids compris entre 1:9 et 9:1 dans le mélange.

**12.** Composition adhésive sensible à la pression selon la revendication 1, dans laquelle l'agent de réticulation est composé de telle sorte qu'un équivalent d'un groupe fonctionnel réticulable contenu dans l'agent de réticulation est compris entre 0,5 et 1,5 équivalent, par rapport à 1 équivalent du groupe fonctionnel réticulable contenu dans le polymère.

**13.** Composition adhésive sensible à la pression selon la revendication 1, comprenant en outre un catalyseur de réticulation dans une quantité comprise entre 0,001 et 1 partie en poids pour 100 parties en poids du polymère.

**14.** Composition adhésive sensible à la pression selon la revendication 1, comprenant en outre un retardateur de réticulation dans une quantité comprise entre 1 et 10 parties en poids pour 100 parties en poids du polymère.

**15.** Composition adhésive sensible à la pression selon la revendication 1, laquelle satisfait à la condition de l'Expression 1 ci-après :

[Expression 1]

$$0,5 \leq Y/X \leq 4$$

in l'Expression 1, X est une force de décollement mesurée à température ambiante avec un taux de décollement de 0,3 m/min et un angle de décollement de 180° pour une couche d'une composition adhésive sensible à la pression dans un échantillon formé en maintenant à 150°C pendant 1 heure dans un état tel que la couche (2,54 cm x 15 cm x 20 $\mu$m (largeur x longueur x épaisseur)) de la composition adhésive sensible à la pression préparée en mélangeant un polymère acrylique et un agent de réticulation est maintenu à 40°C pendant 4 jours immédiatement après le mélangeage du polymère et de l'agent de réticulation, puis est fixé sur une couche de revêtement dur, et Y est une force de décollement mesurée à température ambiante avec un taux de décollement de 20 m/min et un angle de décollement de 180° pour la couche de la composition adhésive sensible à la pression dans l'échantillon.

**16.** Composition adhésive sensible à la pression selon la revendication 15, dans laquelle la force de décollement X est comprise entre 0,049 N/2,54 cm (5 gf/pouce) et 0,294N/2,54 cm (30 gf/pouce).

**17.** Composition adhésive sensible à la pression selon la revendication 15, dans laquelle la force de décollement Y est comprise entre 0,049N/2,54 cm (5 gf/pouce) et 0,686N/2,54 cm (70 gf/pouce).

**18.** Film protecteur stratifié conducteur comprenant :

une couche de substrat protecteur ; et
une couche de la composition adhésive sensible à la pression selon la revendication 1 dans laquelle une structure réticulée est mise en œuvre, formée sur un côté ou les deux côtés de la couche de substrat.

**19.** Stratifié conducteur comprenant :

une couche de substrat ;
un stratifié conducteur comprenant une couche conductrice formée sur un côté de la couche de substrat et une couche de revêtement dur formée sur l'autre côté de la couche de substrat ; et
un film protecteur comprenant une couche de substrat protecteur et une couche adhésive sensible à la pression formée sur un côté de la couche de substrat protecteur dans laquelle la couche adhésive sensible à la pression est fixée sur la couche de revêtement dur du stratifié conducteur,
dans laquelle la couche adhésive sensible à la pression du film protecteur comprend un état réticulé d'une composition adhésive sensible à la pression selon la revendication 1.

**20.** Stratifié conducteur comprenant :

un film conducteur comprenant une couche conductrice et une couche de revêtement dur qui sont formées séquentiellement ; et
un film protecteur comprenant une couche adhésive sensible à la pression et une couche de substrat protecteur, dans lequel le film protecteur est fixé sur la couche de revêtement dur du film conducteur de façon à être décollable par la couche adhésive sensible à la pression, dans laquelle la couche adhésive sensible à la pression comprend un état réticulé d'une composition adhésive sensible à la pression selon la revendication 1.

[FIG.1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130139356
- KR 20110135699
- US 2006177651 A1
- EP 2592125 A1
- US 2012214936 A1